Europäisches Patentamt
European Patent Office
Office européen des brevets

(19)

(11) Publication number: **0 011 117**
**A1**

(12)

# EUROPEAN PATENT APPLICATION

(21) Application number: 79103740.1

(22) Date of filing: 02.10.79

(51) Int. Cl.³: C 08 G 79/02
C 01 B 25/00

(30) Priority: 30.10.78 US 956227

(43) Date of publication of application: 28.05.80 Bulletin 80/11

(84) Designated Contracting States: BE CH DE FR GB

(71) Applicant: ETHYL CORPORATION
330 South Fourth Street
Richmond Virginia(US)

(72) Inventor: Ming LI, Hsueh
7209 Sedley Circle
Baton Rouge, Louisiana(US)

(72) Inventor: Hornbaker, Edwin Dale
10968 Worthington Avenue
Baton Rouge, Louisiana(US)

(74) Representative: Baillie, Iain C. et al,
c/o Ladas, Parry, Von Gehr Goldsmith & Deschamps
Blumenstrasse 48
D-8000 München 2(DE)

(54) **Process for the preparation of phosphonitrilic chloride pleionomers.**

(57) Linear phosphonitrilic chloride pleionomers having an average degree of polymerization of about 15 to 100 are conveniently prepared by heating linear phosphonitrilic chloride oligomers (e.g., $(PNCl_2)_{2-10}$) concurrently removing the phosphorus pentachloride vapors evolved. Heating temperatures of 275°C. -350°C and heating periods of from one to twenty and especially one to seven hours are used.

EP 0 011 117 A1

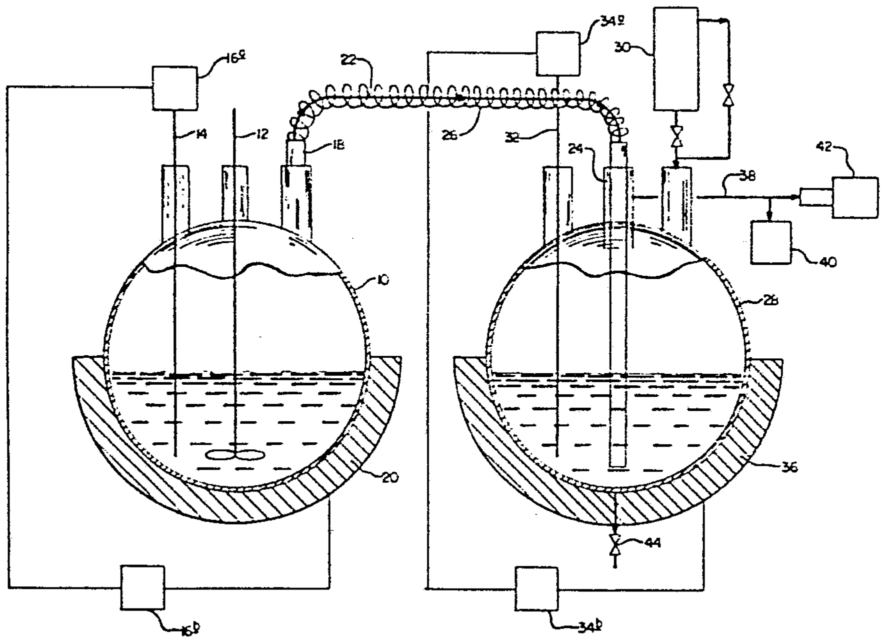

16a
22
14
12
18
26
32
24
34a
30
42
38
40
10
28
20
36
44
16b
34b

TITLE MODIFIED see front page



PHOSPHONITRILIC CHLORIDE PLEIONOMERS

This invention relates to the preparation of liquid, linear phosphonitrilic chloride pleionomers having a number average molecular weight of at least about 1450. More specifically, this invention relates to a process for producing linear phosphonitrilic chloride pleionomers in relatively short time in which the pleionomer product is a viscous, light orange or yellow oil soluble in toluene and chloroform.

Phosphonitrilic chlorides are well known materials and are generally distinguished as cyclic (trimer, tetramer, pentamer, etc.) or linear. Representative art relating to the preparation and reaction of cyclic $(PNCl_2)_n$ polymers includes U. S. 3,359,080; U. S. 3,367,750; U. S. 3,462,247; and U. S. 3,780,162.

Linear phosphonitrilic chlorides may be further classified as oligomers, pleionomers or polymers depending on their molecular weight. According to The Encyclopedia of Polymer Science and Technology, Vol. 9, 485 (1968), oligomers have a molecular weight up to about 1,000, pleionomers have a molecular weight in the range of from about 1,000 to about 10,000 and polymers have a molecular weight above 10,000. Prior art relating to linear phosphonitrilic chloride oligomers, pleionomers and polymers include Paddock et al, Advances in Organic Chemistry and Radiochemistry, Vol. I, New York, Academic Press (1959), pp. 351-353,

359-601, wherein the reaction of $NH_4Cl$ with $PCl_5$ and products therefrom are discussed. U. S. 3,545,942 patented December 8, 1970 discloses a method of thermally stabilizing linear phosphonitrilic chloride oligomers by heating at $240^o$-$260^oC$. for 2 to 8 hours.

Methods for preparing linear phosphonitrilic chloride pleionomers from linear oligomers have been disclosed in the art. For example, U. S. 3,443,913 discloses a method wherein linear $(PNCl_2)_{3-15}$ oligomers are heated at $240^o$-$260^oC$. to produce linear phosphonitrilic chloride pleionomers having a molecular weight between 3,000 and 10,000. However, this process involves heating for long periods of time, the endpoint of the polymerization occurring about 40 to 60 hours after heating has been initiated. The product obtained via this process is reported to be a dark orange viscous oil. See also James M. Maselli, Thomas Bieniek and Rip G. Rice (W. R. Grace and Company), Phosphonitrilic Laminating Resins, Air Force Materials Laboratory, Technical Report AFML-65-314; Wright-Patterson Air Force Base, Ohio: June, 1965, page 18 which describes this same process. At page 47 of this report Maselli et al describe an experiment wherein oligomeric phosphonitrilic chloride was placed in a resin kettle fitted with a nitrogen inlet, stirrer and exhaust tube condenser. The resin kettle was heated to $250^o \pm 10^oC$. for a total of 55 hours while the oligomeric $(PNCl_2)_n$ was stirred under a blanket of dry nitrogen. Samples of the reaction material were taken at selected intervals of time during the heating for molecular weight determination. The resulting data were as follows:

| TIME (Hours) | MOLECULAR WEIGHT (VPO) |
|---|---|
| Start | 700 |
| 10 | 1200 |
| 40 | 3200 |
| 55 | 6900 |

According to the authors, when the heating was continued for an additional 8 hours at temperatures in excess of 250°C., the viscous, soluble oil (m. wt. 6900) was converted to the familiar insoluble "inorganic rubber".

In accordance with the present invention, there is provided a process for the production of linear phosphonitrilic chloride pleionomers in short reaction periods. Besides enabling the pleionomers to be formed in periods of 20 hours or less, the process tends to yield light orange or yellow pleionomers. The invention is described more particularly below and is illustrated by the examples, the accompanying figure being a schematic diagram of an apparatus as used in carrying out Example IV.

More specifically, this invention provides a process for producing linear phosphonitrilic chloride pleionomers from liquid, linear phosphonitrilic chloride oligomers of lower molecular weight which comprises heating said lower molecular weight oligomers at a temperature of between about 275°C. and 350°C. for about 1 to about 20 hours while concurrently withdrawing phosphorus pentachloride vapor from the liquid phase. The phosphorus pentachloride is thought to be evolved by condensation of the oligomers. However, irrespective of the mechanism whereby the $PCl_5$ is evolved, it is an aspect of this invention that the $PCl_5$ vapor is effectively removed from the liquid phase and reaction

vessel during the heating of the liquid phase. Thus, fast removal of $PCl_5$ vapor is particularly preferred. Since a large proportion of the total amount of $PCl_5$ given off during the reaction is evolved during the initial stages, effective removal of the $PCl_5$ vapor during this time is important. Accordingly, removal of the $PCl_5$ vapor during the first 1/4 of the reaction period should be substantially continuous and at an average rate of at least about 20%/hr. based on the total amount of $PCl_5$ evolved during the entire reaction. More preferably, this average initial rate is above 30%/hr., and the most preferred average initial rate is above 40%/hr. Thereafter, $PCl_5$ evolution tapers off thereby making effective removal of the vapor easier. Preferably the $PCl_5$ evolved during the second stage (i.e., during the final 3/4 of the heating period) is removed from the reaction vessel substantially as fast as it is formed, although less effective removal methods may be employed if desired.

It has been found in laboratory experiments that the amount of $PCl_5$ evolved will vary according to such factors as temperature, method of $PCl_5$ removal and quantity of stating oligomers. As stated earlier, the rate of $PCl_5$ evolution is much greater during the initial stages of the reaction than during the later stages. For example, in one experimental run at about 300°C almost 68% of the total amount of $PCl_5$ evolved was given off during the first 1/4 of the reaction period. In a run at 330°C., 93% of the total amount of $PCl_5$ given off was evolved during the first 1/2 of the reaction.

There are several methods by which the $PCl_5$ may be removed. In a preferred embodiment, the $PCl_5$ vapor is withdrawn by maintaining a partial vacuum above the liquid phase. In another preferred embodiment, an inert

gas such as nitrogen is bubbled through the liquid phase to effect withdrawal of phosphorus pentachloride. In still another preferred embodiment, an inert gas is swept across the surface of the liquid phase. Of course the volume of the inert gas swept across the liquid phase will vary according to factors such as the size of the reaction vessel, the quantity of oligomer liquid, and the desired rate of $PCl_5$ removal. In laboratory work it has been found that gas sweep rates of between 4 and 12 liters/min. in a 3 liter flask containing about 1200 grams of liquid oligomer caused efficient removal of the $PCl_5$ vapor. A flow rate of about 6 to 10 liters/min. is especially preferred. Other modifications and combinations of these preferred removal methods may be used in the process of the present invention. For example, it is desirable to effect removal of the phosphorus pentachloride by bubbling an inert gas through the liquid phase while concurrently maintaining a partial vacuum above the polymer liquid.

The present process may be conducted between 275°C. and 350°C. Higher temperatures up to the decomposition temperature of the polymer (about 360°C.) may be employed as long as no deleterious effects, such as excessive cross-linking, result. The temperature at which this process is conducted involves consideration of such factors as time of heating, degree of conversion, etc. Desirably, the oligomer liquid is heated from 1 to 20 hours so as to produce the linear phosphonitrilic chloride polymer of higher molecular weight. Preferably, the reaction is heated for 1 to 7 hours at 300°C to 350°C.

The starting materials used in the process are linear phosphonitrilic chloride oligomers having the structural formula

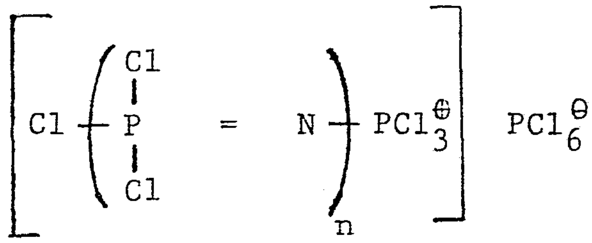

where n is an integer from about 2 to about 10. Without being bound to a particular mechanism, it is believed the condensation effected by the present process causes a change in the makeup of the polymer end group. That is, the resulting polymer has the structural formula

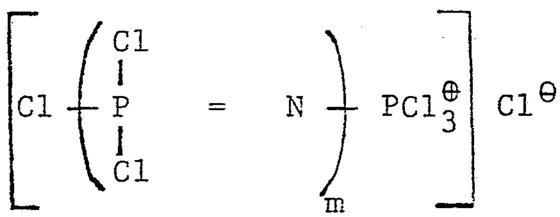

where m is greater than 10. Thus, the products formed in the process of this invention have a number average molecular weight of at least about 1450, and preferably between about 2000 and about 12000, as measured by the Vapor Pressure Osmometry technique. As may be deduced, $PCl_5$ is evolved and the molecular weight increases as the reaction progresses. Therefore, for a known quantity of oligomer, a theoretical yield for $PCl_5$ in the complete conversion of oligomer to pleionomer may be calculated. In actual practice it will be found that due to temperature and other reaction conditions, the amount of $PCl_5$ evolved will be somewhat less than predicted by theoretical calculations. $PCl_5$ yields of 97% up to 100% of the theoretical yield are generally obtained.

The starting oligomers are toluene-insoluble and waxy, generally having a number average molecular weight of 600 to 1200 as measured by the Vapor Pressure

Osmometry technique. The oligomers may be prepared in various ways and their method of preparation is not critical to our process. For example, they may be produced by reacting an excess of phosphorus pentachloride with ammonium chloride under anhydrous conditions in a refluxing solvent, which method is well known in the art. Preferably, the linear oligomers may be prepared via the process described in our copending application

That application discloses a process wherein $PCl_3$ and $Cl_2$ are reacted in a suitable medium in the first step of a two step process. In the second step, $PCl_3$, $Cl_2$ and $NH_3$ are concurrently fed into said medium while keeping the temperature at 100°C to 140°C. The feeds of the reactants are controlled so that until the first 1/2 of the $NH_3$ has been reacted the molar ratio of $PCl_3:NH_3$ (including the $PCl_3$ of the first step) is kept above 2. Thereafter, the feeds are adjusted so that with respect to the total amount of ammonia, said molar ratio is between 1.2 and 1.5. Linear phosphonitrilic chloride oligomers having a number average degree of polymerization from 2 to 9 are produced via the process in high yield.

Accordingly, in a preferred embodiment of the present invention linear phosphonitrilic chloride polymers are prepared by

(a) introducing phosphorus trichloride and chloride into a substantially anhydrous, inert liquid reaction medium;

(b) introducing hydrogen chloride into said reaction medium;

(c) introducing phosphorus trichloride, chlorine, and ammonia concurrently into said reaction medium while maintaining

said medium at a temperature within the range of from about 100°C. to about 140°C., the rates at which the phosphorus trichloride, chlorine, and ammonia are introduced being regulated such that:

(i) The molar ratio of phosphorus trichloride to chlorine introduced initially is from 0.9 to 1.1,

(ii) with respect to the first half of the total amount of ammonia being used, the average molar ratio of phosphorus trichloride of (a) is kept above two, and

(iii) with respect to the total amount of ammonia being used, the average molar ratio of phosphorus trichloride of (a) is within the range of from about 1.2 to about 1.5;

(d) isolating the linear phosphonitrilic chloride oligomers formed in the reaction medium, and then,

(e) heating said lower molecular weight oligomers in liquid phase at a temperature of between about 275°C. and 350°C. for about 1 to about 20 hours while concurrently withdrawing phosphorus pentachloride vapor from said liquid phase.

In conducting the process of this invention, it has been found advantageous to remove solid impurities from the oligomer liquid. Oftentimes, impurities appear in the form of black specks dispersed in the oligomer liquid even after purifying the oligomer by means of a suitable solvent and filtration.

These impurities may result, for example, from contaminants in the reagents used to make the starting material or from contaminants in the equipment used to manufacture the starting material. Since these impurities could affect the properties of the product, it is desirable that they be removed. Any method known to one skilled in the art may be employed including filtration, distillation, and centrifugation. Where even greater purity is desired, the oligomer liquid may be swirled with a magnetic stirrer which causes the contaminants to mitrate to the vortex. Selective removal of liquid at the vortex, e.g., by pipetting the liquid, effectively removes most of the contaminants.

The phosphonitrilic chloride pleinomers prepared by the present process may be substituted with aryloxy and/or alkoxy groups to form substituted pre-polymers useful as hydraulic fluids, lubricants and flame-retardants. Methods for such substitution are well known in the art and are described, for example, in U. S. 3,443,913; U. S. 3,856,712; U. S. 3,883,451; and U. S. 4,055,523. Alternatively, aryloxy and alkoxy substituted prepolymers containing ethylenic unsaturation can be compounded and cured by crosslinking to produce elastomers, coatings, adhesives, potting compounds, thermoset plastics and flexible or rigid foams.

EXAMPLE I

A 3 liter, five-necked round bottom flask was fitted with a thermometer having a Therm-o-Watch® temperature controller attached thereto, a nitrogen inlet tube, and two $N_2/PCl_5$ outlet tubes. Into the flask were placed 1256 grams of liquid, linear, low molecular weight (number average MW∿500-1000) phosphonitrilic chloride oligomers. This liquid

material was heated to $280^{o} \pm 2^{o}C$. for 9.5 hours while being agitated by a mechanical stirrer. Nitrogen was swept across the liquid material by introducing a flow of $N_2$ through the inlet tube which was positioned above the liquid level. In this way the $PCl_5$ vapors were effectively removed from the reaction vessel. The rate of $N_2$ flow into the vessel was about 8 liters/min. during the entire heating period. At the end of this time the reaction vessel contained 600 grams of higher molecular weight, liquid, linear product. This resultant polymer product was an orange, viscous oil which was soluble in toluene and chloroform. A sample was dissolved in toluene and when subjected to the Vapor Pressure Osmometry (VPO) technique was found to have a number average molecular weight ($\bar{M}_n$) of 5720.

EXAMPLE II

The procedure of Example I was repeated using 1375 grams of starting material. In this case the $N_2$ was dispersed throughout the polymer liquid to effect removal of the $PCl_5$. The dispersal was accomplished by positioning the $N_2$ inlet tube below the liquid level. The reaction time was 9.5 hours and 595 grams of higher molecular weight, liquid, linear product was obtained at the end of the reaction. The number average molecular weight was 6810.

EXAMPLE III

In this experiment, the general procedure of Example I was followed except that agitation of the oligomer liquid was effected by use of a magnetic stirrer. 1183 grams of starting material were reacted over a period of 14 hours. A sample taken from the

600 grams of product obtained was found to have a number average molecular weight of 4530.

EXAMPLE IV

In this instance $PCl_5$ removal was effected by pulling a vacuum above the polymer liquid. Referring now to the drawing, a 2 liter, round-bottom flask 10 was fitted with a mechanical stirrer 12, a thermometer 14 having a Therm-o-Watch® temperature controller 16a and 16b attached thereto, and a 90° adapter 18. The flask was cradled in a heating mantle 20, the temperature of which was controlled by the Therm-o-Watch® controller. A 2 liter separator funnel-type flask 28 having a stopcock 44 was connected to the flask 10 by a stem 22 joining the adapter 18 to a vacuum take-off adapter 24 mounted in the flask 28. Heating tape 26 was wrapped around the stem in order to prevent condensation of the $PCl_5$ vapor as it passed through the stem into the flask 28. The flask 28 was also fitted with a thermometer 32 also having a Therm-o-Watch® temperature controller 34a and 34b attached thereto and a pressure equalizing funnel 30. A heating mantle 36, the temperature of which was controlled by the Therm-o-Watch® controller 34a and 34b, supported the flask 28. A suction pump 40 and a pressure gauge 42 were connected to the vacuum take-off adapter 24 by means of stem 38.

Into the flask 10 were placed 1500 grams of low molecular weight, linear phosphonitrilic chloride oligomers. Into the 28 was placed 1 liter of 1,2,4-trichlorobenzene so that the liquid level was below the outlet port of the vacuum take-off adapter. While the temperature of the flask 10 was maintained at about 276°C. to 280°C., the temperature of the flask 28 was kept at about 100°C. A partial vacuum of approximately 156 mm Hg. was maintained above the polymer liquid by the suction pump 40. As $PCl_5$ vapor was generated during the reaction, it was carried through the stem 22 to the vacuum take-off adapter 24 and into the solvent. When the solvent became saturated with $PCl_5$, the saturated solution was discharged through the stopcock 44 and fresh solvent was introduced via the addition funnel 30.

At various times during the reaction 1 gram supplies were dissolved in a suitable solvent and analyzed using $P^{31}$ NMR to determine the degree of conversion of the oligomer to the polymer. Table I below sets forth the results.

TABLE I

| TIME (HOURS) | SOLVENT | % HIGHER MW POLYMERS |
|---|---|---|
| 0 | monochlorobenzene | 3 |
| 8 | monochlorobenzene | 65 |
| 10 | toluene | 82 |
| 11.5 | toluene | 91.3 |
| 13 | toluene | 100 |

As can be seen the reaction took 13 hours to go to completion at which time 700 grams of higher MW, phosphonitrilic chloride oligomers were recovered. The product was a yellowish, viscous oil having a number average MW of 8100 as measured by the VPO technique.

EXAMPLE V

In this example the general procedure of Example I was followed at $300^{o} \pm 2^{o}C$. 1310 grams of starting oligomer were reacted for seven hours at the end of which time 580 grams of yellowish, viscous polymer remained in the reaction vessel. At selected intervals samples were dissolved in a suitable solvent and analyzed under $P^{31}$ NMR to determine the percentage of conversion to the higher MW polymers. At each of these intervals, the reaction flask was weighed in order to determine the amount of $PCl_5$ evolved and the removal rate (which is an average based on the average amount of $PCl_5$ evolved divided by the total of the $PCl_5$ evolved). The results are set forth in Table II below.

TABLE II

| TIME (HOURS) | SOLVENT | $\overline{M}_n$ | $PCl_5$ REMOVED (g) | $PCl_5$ REMOVAL RATE (%/HR) | % CONVERSION |
|---|---|---|---|---|---|
| 0 | monochloro-benzene | 500-700 | --- | --- | --- |
| 2 | monochloro-benzene | --- | 428 | 34.1 | 22.3 |
| 4 | toluene | 4713 | 576 | 11.7 | 76 |
| 6 | toluene | 6803 | 618 | 6.7 | 96.7 |
| 7 | toluene | 7215 | 628 | 1.6 | 97.4 |

EXAMPLE VI

The general procedure of Example I was followed at 320° ± 2°C. 1530 Grams of starting material were reacted for 4 hours at the end of which time 595 grams of higher molecular weight polymer were obtained. As in Example V, at selected intervals, samples were analyzed by $P^{31}$ NMR and the reaction flask weighed. The results are set forth in Table III below.

TABLE III

| TIME (HOURS) | SOLVENT | $\bar{M}_n$ | TOTAL $PCl_5$ REMOVED(g) | $PCl_5$ REMOVAL RATE %/HR) | % CONVERSION |
|---|---|---|---|---|---|
| 0 | monochloro-benzene | 500-700 | --- | --- | --- |
| 2 | toluene | 4525 | 680 | 44.1 | 68 |
| 3.5 | toluene | --- | --- | --- | 97.1 |
| 4 | toluene | 6785 | 770 | 5.8 | 98.7 |

EXAMPLE VII

In this instance 1322 grams of starting oligomer were heated at the reaction temperature for 5 hours beyond the endpoint in order to determine the effect on the pleinonomer product. After 15 hours of heating at 280° ± 2°C. 608 grams of light orange or yellow phosphonitrilic chloride pleionomer were recovered. No adverse side effects such as crosslinking were observed. The results are set forth in Table IV below.

TABLE IV

| TIME (HOURS) | SOLVENT | $\bar{M}_n$ | TOTAL $PCl_5$ REMOVED (g) | $PCl_5$ REMOVAL RATE (%/HR) | % CONVERSION |
|---|---|---|---|---|---|
| 0 | chloro-benzene | --- | --- | --- | --- |
| 2 | chloro-benzene | --- | 368 | 30.5 | --- |
| 4 | chloro-benzene | --- | 462 | 7.8 | 53 |
| 6 | toluene | --- | 540 | 6.5 | 73.8 |
| 8 | toluene | 5525 | --- | --- | 91.2 |
| 9 | toluene | 6357 | 582 | 2.3 | --- |
| 10 | toluene | --- | 587 | 0.8 | 97.1 |
| ---- | APPROXIMATE ENDPOINT | | ---- | ---- | ---- |
| 11 | toluene | 7945 | 591 | 0.7 | 97.1 |
| 15 | toluene | 8587 | 603 | 0.5 | --- |

CLAIMS

1. A process for producing linear phosphonitrilic chloride pleionomers from liquid, linear phosphonitrilic chloride oligomers of lower molecular weight characterized by heating said lower molecular weight oligomers in liquid phase at a temperature of between about 275°C. and 350°C. for about one to about twenty hours while concurrently withdrawing phosphorus pentachloride vapor from said liquid phase.

2. The process of Claim 1 further characterized in that said phosphorus pentachloride vapor is removed at an average rate of at least 20%/hr. during the first 1/4 of the reaction period based on the total amount of phosphorus pentachloride evolved.

3. The process of Claim 1 further characterized in that said phosphorus pentachloride vapor is removed at an average rate of at least 30%/hr. during the first 1/4 of the reaction period based on the total amount of phosphorus pentachloride evolved.

4. The process of Claim 1 further characterized in that said phosphorus pentachloride vapor is removed at an average rate of at least 40%/hr during the first 1/4 of the reaction period based on the total amount of phosphorus pentachloride evolved.

5. The process of Claim 1 further characterized in that said temperature is between about 300°C. and 350°C.

6. The process of Claim 1 further characterized in that said linear oligomer is heated for about one to about seven hours.

7. The process of Claim 1 further characterized in that said linear oligomer is a clear liquid that is substantially free from solid impurities.

8. The process of Claim 2 further characterized in that the removal of said phosphorus pentachloride vapor is effected by maintaining a partial vacuum above said liquid phase.

9. The process of Claim 2 further characterized in that the removal of phosphorus pentachloride vapor is effected by bubbling an inert gas through said liquid phase.

10. The process of Claim 2 further characterized in that the removal of said phosphorus pentachloride vapor is effected by sweeping an inert gas across the surface of said liquid phase.

0011117

1/1

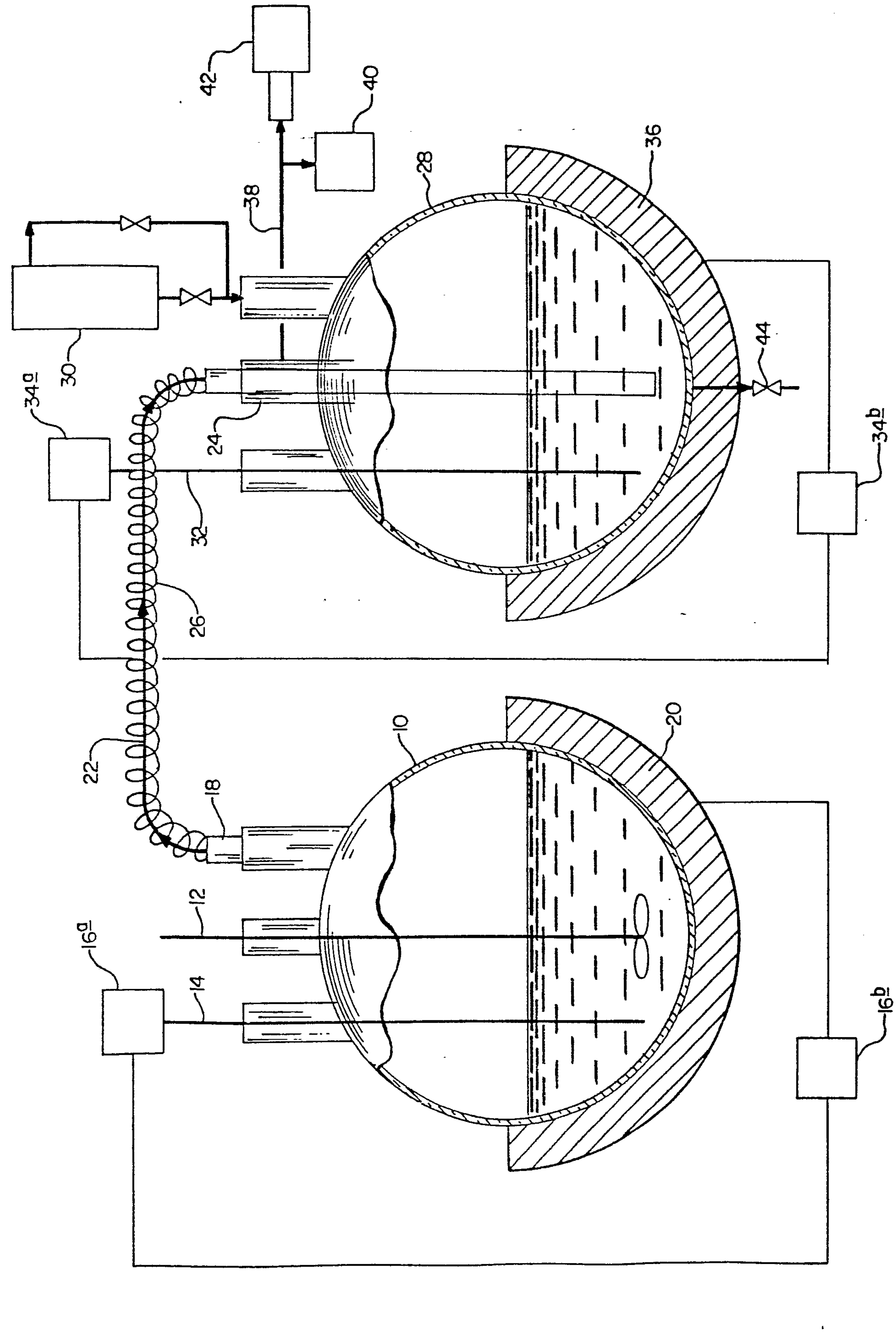

European Patent Office

# EUROPEAN SEARCH REPORT

0011117

Application number

EP 79 103 740.1

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | E. WIBERG "Holleman-Wiberg Lehrbuch der Anorganischen Chemie" 81st edition, 1976, DE GRUYTER, Berlin, New York * page 186, lines 6 to 8; page 187, lines 20 to 21 * -- | 1 | C 08 G 79/02<br>C 01 B 25/00 |
| D | US - A - 3 443 913 (BIENIEK et al.) * column 1, lines 48 to 54 * -- | | TECHNICAL FIELDS SEARCHED (Int.Cl.3) |
| A | US - A - 3 370 020 (ALLCOCK et al.) * column 2, lines 2 to 16, 25 to 31, 60 to 63 * ---- | | C 01 B 25/00<br>C 07 F 9/00<br>C 08 G 79/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 28-02-1980 | KRAIL |

EPO Form 1503.1 06.78